# EUROPEAN PATENT APPLICATION

(11) **EP 4 716 220 A1**
(43) Date of publication of application: **25.03.2026**
(21) Application number: 24847952.9
(22) Date of filing: 08.07.2024
(51) Int. Cl.: H04N 19/65, G06F 3/048

(54) **INTERFACE IMAGE PROCESSING METHOD, ELECTRONIC DEVICE, AND STORAGE MEDIUM**

(30) Priority: 31.07.2023 CN 202310960085
(71) Applicant: Huawei Technologies Co., Ltd., Shenzhen, Guangdong 518129 (CN)
(72) Inventor: LI, Yang, Shenzhen, Guangdong 518129 (CN); BAO, Siyuan, Shenzhen, Guangdong 518129 (CN); ZHU, Jun, Shenzhen, Guangdong 518129 (CN); YANG, Qichao, Shenzhen, Guangdong 518129 (CN)
(74) Representative: Grünecker Patent- und Rechtsanwälte PartG mbB
(86) International application number: PCT/CN2024/104149
(87) International publication number: WO 2025/025992

(57) **Abstract**

Embodiments of this application provide an interface image processing method, an electronic device, and a storage medium, which relate to the field of image processing technologies, to alleviate a problem that picture content is not displayed in a timely manner in a fast page scrolling process. The method includes a staggered-frame processing procedure, and the staggered-frame processing procedure includes: obtaining, in an n^{th} frame, a picture index position requested by an input event of the n^{th} frame, decoding a picture corresponding to the picture index position requested by the input event of the n^{th} frame, and displaying an image of an (n-1)^{th} frame, where the image of the (n-1)^{th} frame includes a picture corresponding to a picture index position requested by an input event of the (n-1)^{th} frame; and obtaining, in an (n+a)^{th} frame, a picture index position requested by an input event of the (n+a)^{th} frame, decoding a picture corresponding to the picture index position requested by the input event of the (n+a)^{th} frame, and displaying an image of the n^{th} frame, where the image of the n^{th} frame includes the picture corresponding to the picture index position requested by the input event of the n^{th} frame, and a is an integer greater than or equal to 1.

## Description

This application claims priority to Chinese Patent Application No. 202310960085.7, filed with the China National Intellectual Property Administration on July 31, 2023, and entitled "INTERFACE IMAGE PROCESSING METHOD, ELECTRONIC DEVICE, AND STORAGE MEDIUM", which is incorporated herein by reference in its entirety.

### TECHNICAL FIELD

This application relates to the field of image processing technologies, and in particular, to an interface image processing method, an electronic device, and a storage medium.

### BACKGROUND

As a photographing function of an electronic device such as a mobile phone becomes increasingly powerful, a user stores a large quantity of pictures in the electronic device. A gallery application is configured to display the picture in the electronic device. The gallery application usually includes two types of page layouts: a grid-type page layout and a large-image-type page layout. The grid-type page layout may display a plurality of pictures, helping the user obtain picture content in a wider range and quickly browse or locate a picture by sliding a page or dragging a scroll bar. However, a current electronic device may not display picture content in a timely manner in a fast page scrolling process.

### SUMMARY

Technical solutions of this application provide an interface image processing method, an electronic device, and a storage medium, to alleviate a problem that picture content is not displayed in a timely manner in a fast page scrolling process.

According to a first aspect, an interface image processing method is provided. An interface is configured to display a plurality of pictures. The method includes a staggered-frame processing procedure, and the staggered-frame processing procedure includes: obtaining, in an n^{th} frame, a picture index position requested by an input event of the n^{th} frame, decoding a picture corresponding to the picture index position requested by the input event of the n^{th} frame, and displaying an image of an (n-1)^{th} frame, where the image of the (n-1)^{th} frame includes a picture corresponding to a picture index position requested by an input event of the (n-1)^{th} frame; and obtaining, in an (n+a)^{th} frame, a picture index position requested by an input event of the (n+a)^{th} frame, decoding a picture corresponding to the picture index position requested by the input event of the (n+a)^{th} frame, and displaying an image of the n^{th} frame, where the image of the n^{th} frame includes the picture corresponding to the picture index position requested by the input event of the n^{th} frame, and a is an integer greater than or equal to 1. A decoding process and a display process corresponding to a same frame are separated and executed in two frames. In this way, there is a higher probability that an image is decoded before being displayed, thereby alleviating a problem that picture content is not displayed in a timely manner in a fast page scrolling process.

In a possible implementation, the staggered-frame processing procedure is executed if a first speed exceeds a first threshold. The first speed is a scrolling speed of the interface or a drag speed of a drag operation acting on a scroll bar in the interface. When an interface scrolling speed is high, the staggered-frame processing procedure is executed to add a picture decoding event. When the interface scrolling speed is slow, a response speed is improved.

In a possible implementation, a=1. In a first staggered-frame processing procedure, a decoding process and a drawing process originally corresponding to a same frame are separated and respectively executed in two adjacent frames. In this way, there is a higher probability that an image is decoded before being displayed, thereby alleviating a problem that picture content is not displayed in a timely manner in a fast page scrolling process.

In a possible implementation, a=2; and the staggered-frame processing procedure further includes: obtaining, in an (n+1)^{th} frame, a picture index position requested by an input event of the (n+1)^{th} frame, decoding a picture corresponding to the picture index position requested by the input event of the (n+1)^{th} frame, and displaying the image of the (n-1)^{th} frame. More picture decoding time is given, so that there is a higher probability that a picture is displayed subsequently. In addition, in a subsequent process, the picture is decoded and displayed separately in staggered different frames. That is, more picture decoding time is given, to improve a probability of displaying the picture.

In a possible implementation, when the interface is a first view interface, the staggered-frame processing procedure is a first staggered-frame processing procedure; when the interface is a second view interface, the staggered-frame processing procedure is a second staggered-frame processing procedure, and a quantity of pictures displayed in the first view interface is less than a quantity of pictures displayed in the second view interface; a=1 in the first staggered-frame processing procedure; a=2 in the second staggered-frame processing procedure; and the second staggered-frame processing procedure further includes: obtaining, in an (n+1)^{th} frame, a picture index position requested by an input event of the (n+1)^{th} frame, decoding a picture corresponding to the picture index position requested by the input event of the (n+1)^{th} frame, and displaying the image of the (n-1)^{th} frame.

In a possible implementation, the first view interface is a day view interface, the second view interface is a month view interface or a year view interface, the day view interface is an interface that displays a picture in a unit of day, the month view interface is an interface that displays a picture in a unit of month, and the year view interface is an interface that displays a picture in a unit of year.

In a possible implementation, a frame rate in a first state is less than a frame rate in a second state; and the interface scrolls in the first state, and the interface is still in the second state. When a large quantity of pictures need to be updated in the interface, a low frame rate is used, to improve a picture decoding speed. When a small quantity of pictures need to be updated in the interface, a high frame rate is used, to improve picture smoothness.

In a possible implementation, a frame rate in a first state is less than a frame rate in a second state; in the first state, the interface scrolls and the first speed exceeds a second threshold; and in the second state, the interface is still, or the interface scrolls and the first speed does not exceed the second threshold.

In a possible implementation, the first threshold is less than or equal to the second threshold.

In a possible implementation, the picture displayed in the interface is a first-resolution picture if the first speed exceeds a third threshold; and the picture displayed in the interface is a second-resolution picture if the first speed does not exceed the third threshold, and a resolution of the second-resolution picture is greater than a resolution of the first-resolution picture. When a large quantity of pictures need to be updated in the interface, the picture is decoded with a low resolution, to improve a picture decoding speed. When a small quantity of pictures need to be updated in the interface, a high frame rate is used, to improve picture smoothness.

In a possible implementation, the first threshold is less than the third threshold.

In a possible implementation, the second threshold is less than the third threshold.

In a possible implementation, the first-resolution picture is decoded and displayed if a preset condition is not met after the interface starts scrolling; and the second-resolution picture is decoded and displayed if the preset condition is met after the interface starts scrolling, where the preset condition is that duration from a moment t1 at which the interface starts scrolling to a current moment t2 reaches preset duration Δt, and a picture index position requested by an input event of a current frame includes at least a part of picture index positions requested by input events between t1 and t2-△t.

In a possible implementation, obtaining the picture index position requested by the input event of the n^{th} frame includes: executing an input event task of the n^{th} frame, to obtain the picture index position requested by the input event of the n^{th} frame; displaying the image of the (n-1)^{th} frame includes: executing a layout task of the (n-1)^{th} frame and a drawing task of the (n-1)^{th} frame; obtaining the picture index position requested by the input event of the (n+a)^{th} frame includes: executing an input event task of the (n+a)^{th} frame, and obtaining the picture index position requested by the input event of the (n+a)^{th} frame; and displaying the image of the n^{th} frame includes: executing a layout task of the n^{th} frame and a drawing task of the n^{th} frame.

According to a second aspect, an interface image processing method is provided, including: displaying a plurality of pictures in an interface, where a frame rate in a first state is less than a frame rate in a second state; and the interface scrolls in the first state, and the interface is still in the second state. When a large quantity of pictures need to be updated in the interface, a low frame rate is used, to improve a picture decoding speed. When a small quantity of pictures need to be updated in the interface, a high frame rate is used, to improve picture smoothness.

According to a third aspect, an interface image processing method is provided, including: displaying a plurality of pictures in an interface, where a frame rate in a first state is less than a frame rate in a second state; in the first state, the interface scrolls and a first speed exceeds a second threshold, and the first speed is a scrolling speed of the interface or a drag speed of a drag operation acting on a scroll bar in the interface; and in the second state, the interface is still and the first speed does not exceed the second threshold. When a large quantity of pictures need to be updated in the interface, a low frame rate is used, to improve a picture decoding speed. When a small quantity of pictures need to be updated in the interface, a high frame rate is used, to improve picture smoothness.

According to a fourth aspect, an interface image processing method is provided, including: displaying a plurality of pictures in an interface, where the picture is a first-resolution picture if a first speed exceeds a third threshold, and the first speed is a scrolling speed of the interface or a drag speed of a drag operation acting on a scroll bar in the interface; and the picture is a second-resolution picture if the first speed does not exceed the third threshold, and a resolution of the second-resolution picture is greater than a resolution of the first-resolution picture. When a large quantity of pictures need to be updated in the interface, the picture is decoded with a low resolution, to improve a picture decoding speed. When a small quantity of pictures need to be updated in the interface, a high frame rate is used, to improve picture smoothness.

In a possible implementation, the first-resolution picture is decoded and displayed if a preset condition is not met after the interface starts scrolling; and the second-resolution picture is decoded and displayed if the preset condition is met after the interface starts scrolling, where the preset condition is that duration from a moment at which the interface starts scrolling to a current moment reaches preset duration, and a picture index position requested by an input event of a current frame includes a picture index position requested by an input event of a frame that is before the preset duration.

According to a fifth aspect, an electronic device is provided, including a processor and a memory. The memory is configured to store at least one instruction, and when the instruction is loaded and executed by the processor, the electronic device is enabled to perform the foregoing interface image processing method.

According to a sixth aspect, a computer-readable storage medium is provided, including a program or instructions. When the program or the instructions run on a computer, the foregoing method is performed.

According to the interface image processing method, the electronic device, and the storage medium in embodiments of this application, a decoding process and a display process corresponding to a same frame are separated and executed in two frames. In this way, there is a higher probability that an image is decoded before being displayed, thereby alleviating a problem that picture content is not displayed in a timely manner in a fast page scrolling process. Alternatively, a problem that picture content is not displayed in a timely manner in a fast page scrolling process is alleviated by reducing a frame rate. Alternatively, a problem that picture content is not displayed in a timely manner in a fast page scrolling process is alleviated by decoding a low-resolution picture.

### BRIEF DESCRIPTION OF DRAWINGS

FIG. 1 is a diagram of an image display time sequence in a related technology;
FIG. 2 is a block diagram of a structure of an electronic device according to an embodiment of this application;
FIG. 3 is a diagram of a software architecture according to an embodiment of this application;
FIG. 4 is a diagram of a time sequence of an interface image processing method according to an embodiment of this application;
FIG. 5A to FIG. 5D are a diagram of an interface change corresponding to FIG. 4;
FIG. 6 is a diagram of a time sequence of another interface image processing method according to an embodiment of this application;
FIG. 7 is a diagram of a day view interface according to an embodiment of this application;
FIG. 8 is a diagram of a month view interface according to an embodiment of this application;
FIG. 9 is a diagram of a year view interface according to an embodiment of this application;
FIG. 10 is a schematic flowchart of an interface image processing method according to an embodiment of this application; and
FIG. 11 is a schematic flowchart of another interface image processing method according to an embodiment of this application.

### DESCRIPTION OF EMBODIMENTS

Terms used in embodiments of this application are only used to explain specific embodiments of this application, but are not intended to limit this application.

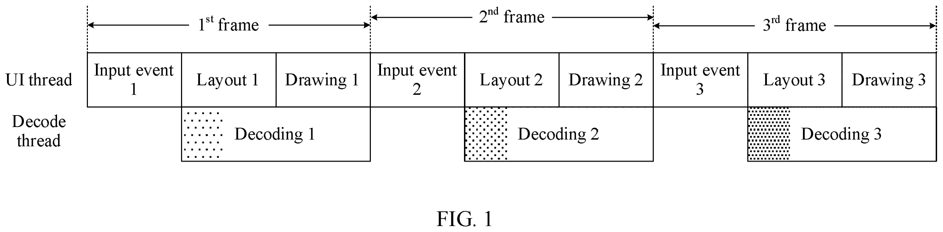

Before embodiments of this application are described, a related technology and a technical problem thereof are first described. As shown in FIG. 1, in a related technology, in each frame, a user interface (User Interface, UI) thread executes an input event, where the input event is an input triggered in each frame, for example, an event of dragging a scroll bar; calculates a drag distance of the scroll bar based on the input event; and determines a requested to-be-loaded picture based on the drag distance. A decode decode thread decodes the to-be-loaded picture requested by the input event, to obtain a decoded to-be-loaded picture. The UI thread performs animation and traversal traversal. The traversal includes measurement, layout, and drawing. After completing decoding, the decode thread notifies, by using a message, the UI thread that decoding is completed. Because of decoding, in a fast page scrolling process, a new picture is displayed in each frame, and it takes a long period of time to decode the picture. Consequently, a decoded picture requested in a current frame cannot be obtained through drawing of each frame, the picture requested in the current frame cannot be drawn or displayed, and a white block is displayed in an area originally supposed to display the picture. A number in FIG. 1 is a sequence number of a frame corresponding to an executed task. To resolve the foregoing problem, the technical solution of embodiments of this application is provided. The technical solution of embodiments of this application is described below.

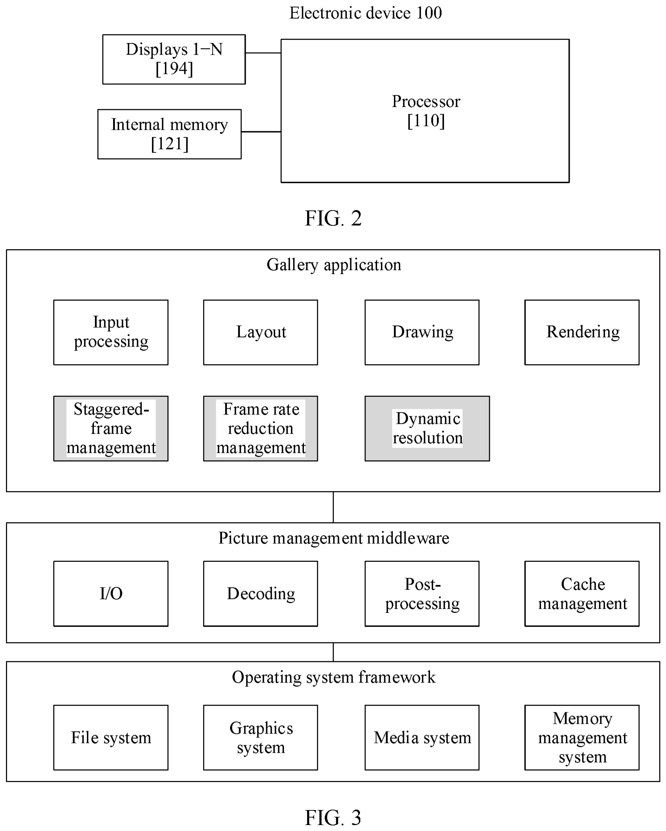

FIG. 2 is a diagram of a structure of an electronic device 100.

The electronic device 100 may include a processor 110, an internal memory 121, a display 194, and the like. It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

The electronic device 100 may implement a display function through the GPU, the display 194, the application processor, and the like. The GPU is a microprocessor for image processing, and is connected to the display 194 and the application processor. The GPU is configured to perform mathematical and geometric computing for graphics rendering. The processor 110 may include one or more GPUs, and execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The internal memory 121 may be configured to store computer-executable program code, and the executable program code includes instructions. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the electronic device 100.

FIG. 3 is a diagram of a software architecture according to an embodiment of this application. The software architecture includes an application layer, a middleware layer, and an operating system framework layer. The application layer includes a gallery application. The gallery application may include an input processing module, a layout module, a drawing module, a rendering module, a staggered-frame management module, a frame rate reduction management module, and a dynamic resolution module. The input processing module is configured to execute an input event, the layout module is configured to perform a layout layout, the drawing module is configured to perform drawing, and the rendering module is configured to perform rendering. The staggered-frame management module, the frame rate reduction management module, and the dynamic resolution module are described in detail in the following content. The middleware layer includes picture management middleware. The picture management middleware includes an I/O module, a decoding module, a post-processing module, and a cache management module. The I/O module is configured to manage an input and an output of a picture, the decoding module is configured to decode the picture, post-processing is to process a decoded picture, and cache management is cache management of the picture. The operating system framework layer includes a file system, a graphics system, a media system, and a memory management system. The middleware is a functional layer between an application and an operating system, and is configured to provide a basic service or function for invoking by the application.

An embodiment of this application provides an interface image processing method. An interface is configured to display a plurality of pictures. The method may be performed by the foregoing electronic device. The method includes a staggered-frame processing procedure, and the staggered-frame processing procedure includes:
obtaining, in an n^{th} frame, a picture index position requested by an input event of the n^{th} frame, decoding a picture corresponding to the picture index position requested by the input event of the n^{th} frame, and displaying an image of an (n-1)^{th} frame, where the image of the (n-1)^{th} frame includes a picture corresponding to a picture index position requested by an input event of the (n-1)^{th} frame; and n is an integer greater than 1; and
obtaining, in an (n+a)^{th} frame, a picture index position requested by an input event of the (n+a)^{th} frame, decoding a picture corresponding to the picture index position requested by the input event of the (n+a)^{th} frame, and displaying an image of the n^{th} frame, where the image of the n^{th} frame includes the picture corresponding to the picture index position requested by the input event of the n^{th} frame, and a is an integer greater than or equal to 1.

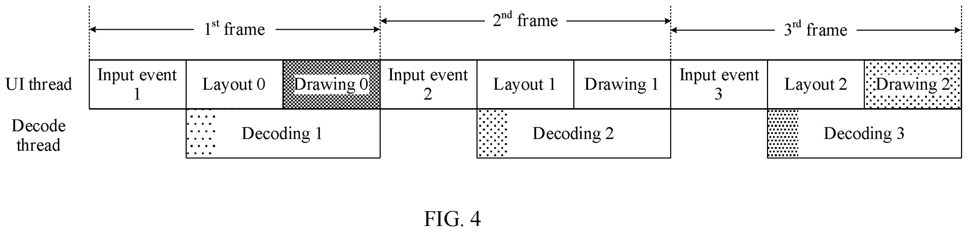

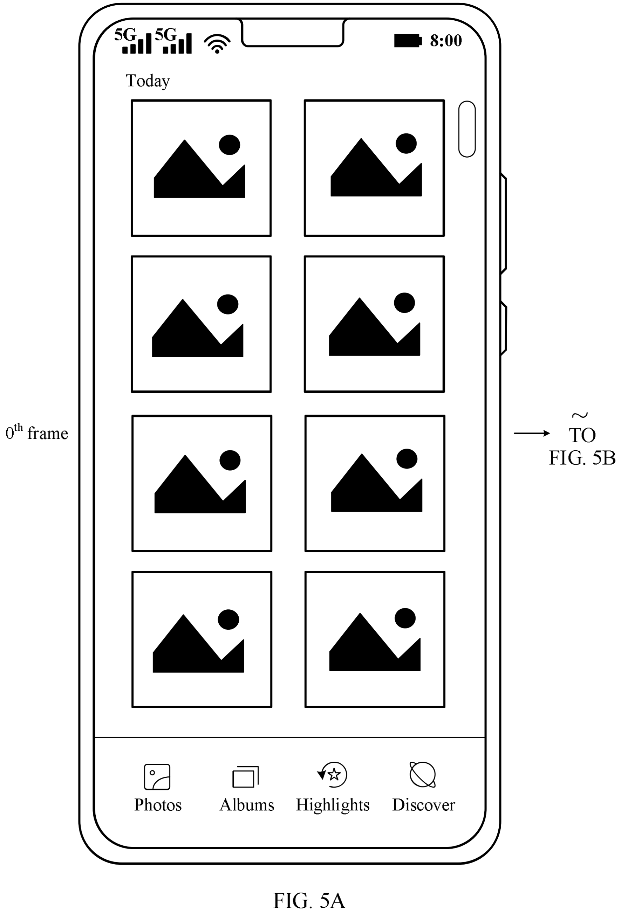

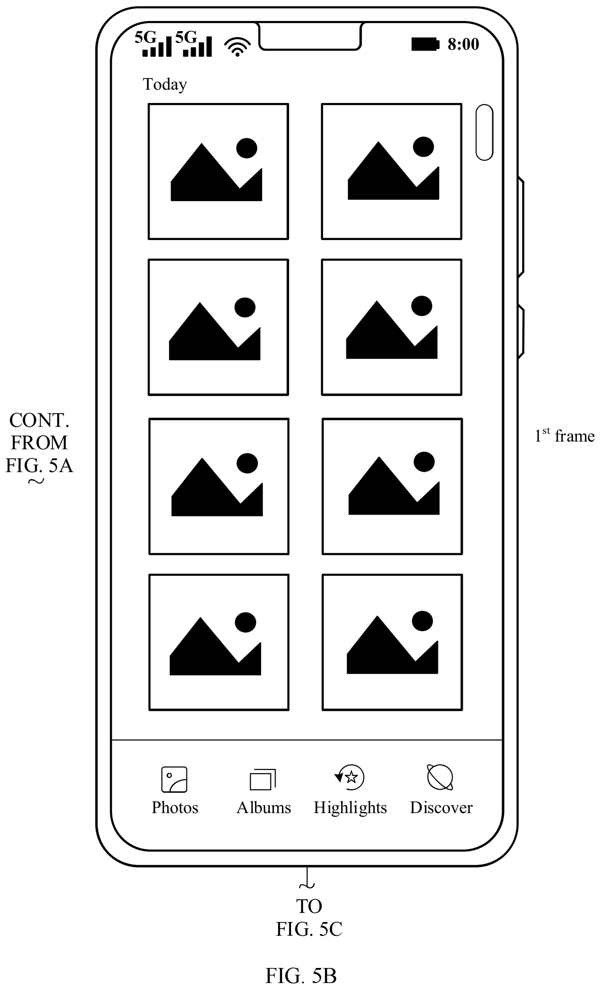

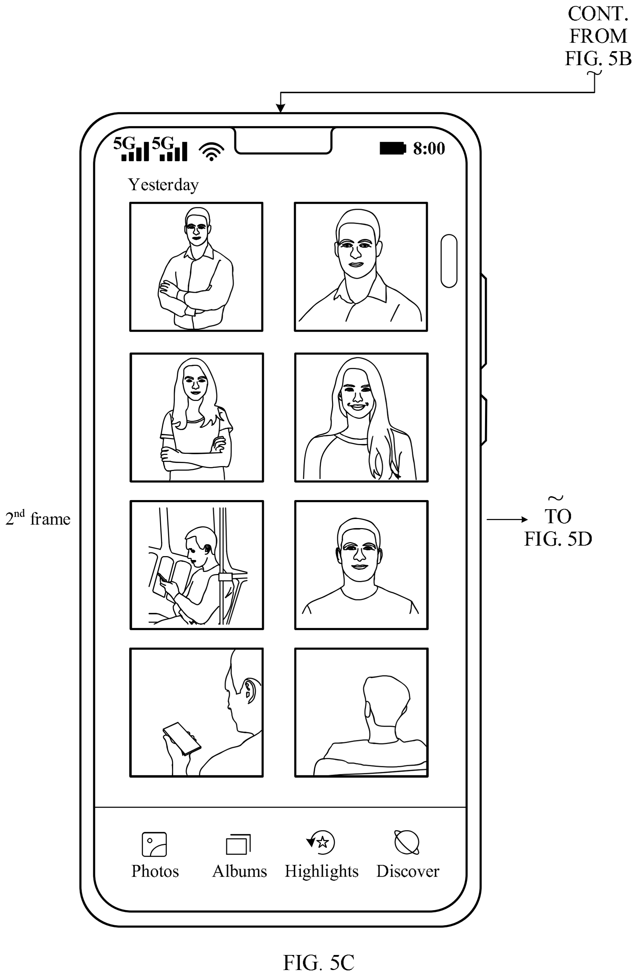

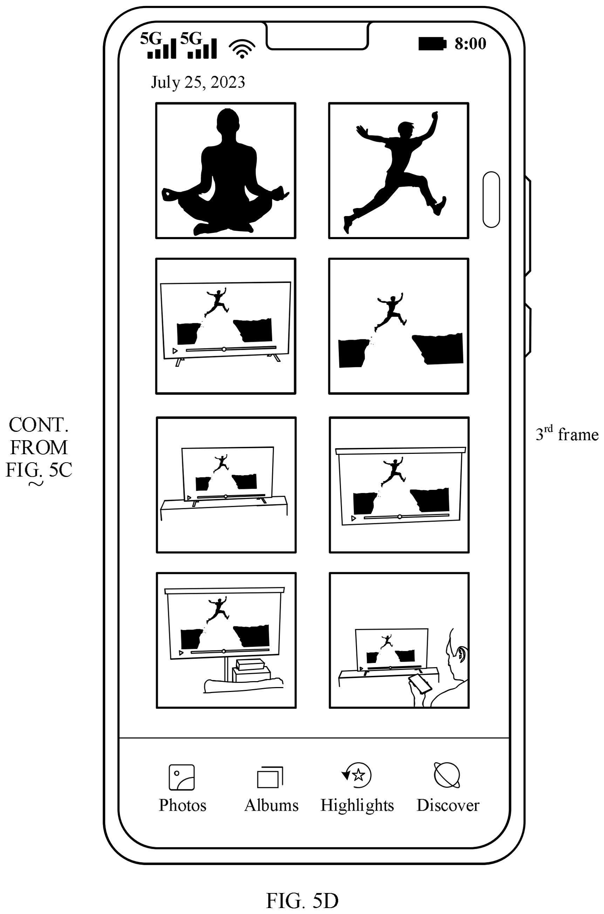

Specifically, as shown in FIG. 4 and FIG. 5A to FIG. 5D, a=1 and n=1 are used as an example. A current interface is, for example, a gallery interface, and a current input is an input operation of dragging a scroll bar in the gallery interface by a user. It is assumed that there are four consecutive frames from a 0^{th} frame to a 3^{rd} frame. In the 0^{th} frame, a 0^{th} picture to a 7^{th} picture in a gallery are displayed in the interface, and in the 1^{st} frame to the 3^{rd} frame, the user drags the scroll bar in the interface to quickly slide. In the 0^{th} frame to the 3^{rd} frame, the scroll bar in the interface is separately dragged to four positions A, B, C, and D in the input operation. In the 1^{st} frame, a UI thread executes an input event of the 1^{st} frame, to obtain a corresponding scroll bar dragging position B, and obtain picture index positions 10 to 17 corresponding to the position. 10 to 17 are picture index positions requested by the input event of the 1^{st} frame, and pictures corresponding to the index positions may be a 10^{th} picture to a 17^{th} picture. In the 1^{st} frame, a decode thread decodes the 10^{th} picture to the 17^{th} picture. However, an image of the 1^{st} frame is not displayed in the 1^{st} frame, that is, an image of the 0^{th} frame is displayed instead of triggering scrolling to a corresponding position in response to scrolling of the scroll bar. In other words, only a picture corresponding to the 1^{st} frame is decoded in the 1^{st} frame, and in the 1^{st} frame, the interface still stays in the 0^{th} frame. To be specific, the scroll bar in the interface still stays at the position A, and the picture displayed in the interface is still a picture displayed when the scroll bar stays at the position A. That is, the 0^{th} picture to the 7^{th} picture are displayed. In the 2^{nd} frame, the UI thread executes an input event of the 2^{nd} frame, to obtain a corresponding scroll bar dragging position C, and obtain picture index positions 20 to 27 corresponding to the position. The decode thread decodes a 20^{th} picture to a 27^{th} picture in the 2^{nd} frame. In addition, the image of the 1^{st} frame is displayed in the 2^{nd} frame. The image of the 1^{st} frame includes the 10^{th} picture to the 17^{th} picture obtained through decoding in the 1^{st} frame. In the 3^{rd} frame, the UI thread executes an input event of the 3^{rd} frame, to obtain a corresponding scroll bar dragging position D, and obtain picture index positions 30 to 37 corresponding to the position. The decode thread decodes a 30^{th} picture to a 37^{th} picture in the 3^{rd} frame. In addition, an image of the 2^{nd} frame is displayed in the 3^{rd} frame. The image of the 2^{nd} frame includes the 20^{th} picture to the 27^{th} picture obtained through decoding in the 2^{nd} frame. The rest may be deduced by analogy. That is, in the staggered-frame processing procedure, a corresponding input event and picture decoding are performed in a current frame, but displaying of an image is delayed by one frame. In other words, a picture is decoded and displayed respectively in two staggered frames. In this way, even if duration of decoding time of the picture is long, there is a higher probability that the picture is displayed in a next frame.

According to the interface image processing method in this embodiment of this application, a decoding process and a display process corresponding to a same frame are separated and executed in two frames. In this way, there is a higher probability that an image is decoded before being displayed, thereby alleviating a problem that picture content is not displayed in a timely manner in a fast page scrolling process.

In a possible implementation, the staggered-frame processing procedure is executed if a first speed exceeds a first threshold. The first speed is a scrolling speed of the interface. In other words, the interface in this embodiment is a gallery application interface, and a scroll bar may be set in the interface. When the electronic device detects a drag operation acting on the scroll bar or a slide operation acting on the interface, the interface scrolls, and the displayed picture is updated as the interface scrolls. A higher scrolling speed of the interface leads to a higher probability that more pictures need to be decoded in each frame in a scrolling process. In an embodiment, whether to trigger execution of the staggered-frame processing procedure may be determined depending on whether a drag speed of a drag operation acting on the scroll bar in the interface exceeds the first threshold. For example, if the drag speed of the drag operation acting on the scroll bar in the interface exceeds the first threshold, it indicates that the picture in the interface is rapidly scrolled and updated, and a large quantity of pictures need to be decoded in one frame of time. Consequently, picture decoding pressure is large. In this case, the staggered-frame processing procedure may be executed, to avoid a problem that the picture is not displayed in a timely manner. If the drag speed of the drag operation acting on the scroll bar in the interface does not exceed the first threshold, it indicates that a picture scrolling and updating speed in the interface is slow, and a small quantity of pictures need to be decoded in one frame of time. Consequently, picture decoding pressure is low. In this case, the staggered-frame processing procedure does not need to be executed, and a non-staggered-frame processing procedure may be executed. In the non-staggered-frame processing procedure, in each frame, a picture of the current frame may be decoded, and an image of the current frame is displayed. Because the picture decoding pressure is low, the image of the current frame may be displayed based on a decoded picture of the current frame. In other words, the image of the current frame includes the decoded picture of the current frame, and a problem that the decoded picture is not displayed in a timely manner in the current frame is not unlikely to occur. In another embodiment, whether to trigger execution of the staggered-frame processing procedure may be determined depending on whether the scrolling speed of the interface exceeds the first threshold. A specific process is not described again.

In a possible implementation, the staggered-frame processing procedure includes a first staggered-frame processing procedure, and a=1 in the first staggered-frame processing procedure. In the first staggered-frame processing procedure, a decoding process and a drawing process originally corresponding to a same frame are separated and respectively executed in two adjacent frames. In this way, there is a higher probability that an image is decoded before being displayed, thereby alleviating a problem that picture content is not displayed in a timely manner in a fast page scrolling process.

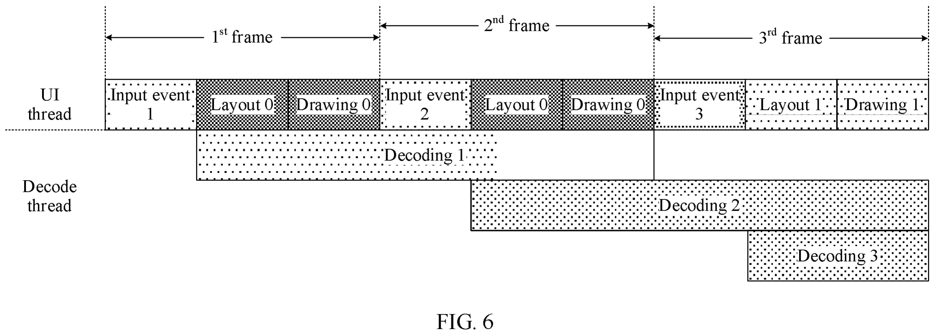

In a possible implementation, the staggered-frame processing procedure includes a second staggered-frame processing procedure. As shown in FIG. 6, a=2 in the second staggered-frame processing procedure. The second staggered-frame processing procedure further includes: obtaining, in an (n+1)^{th} frame, a picture index position requested by an input event of the (n+1)^{th} frame, decoding a picture corresponding to the picture index position requested by the input event of the (n+1)^{th} frame, and displaying the image of the (n-1)^{th} frame.

Specifically, in the second staggered-frame procedure, the current interface is, for example, a gallery interface, and n=1 is used as an example. A current input is an input operation of dragging a scroll bar in the gallery interface by a user. It is assumed that there are five consecutive frames from a 0^{th} frame to a 4^{th} frame. In the 0^{th} frame, a 0^{th} picture to a 36^{th} picture in a gallery are displayed in the interface, and in a 1^{st} frame to a 3^{rd} frame, the user drags the scroll bar in the interface to quickly slide. In the 0^{th} frame to the 3^{rd} frame, the scroll bar in the interface is separately dragged to four positions A, B, C, and D in the input operation. In the n^{th} frame, namely, the 1^{st} frame, the UI thread executes an input event of the 1^{st} frame, to obtain a corresponding scroll bar dragging position B, and obtain picture index positions 1000 to 1036 corresponding to the position. 1000 to 1036 are picture index positions requested by the input event of the 1^{st} frame, and pictures corresponding to the index positions may be a 1000^{th} picture to a 1036^{th} picture. In the 1^{st} frame, the decode thread decodes the 1000^{th} picture to the 1036^{th} picture. However, an image of the 1^{st} frame is not displayed in the 1^{st} frame, that is, an image of the 0^{th} frame is displayed instead of triggering scrolling to a corresponding position in response to scrolling of the scroll bar. In other words, only a picture corresponding to the 1^{st} frame is decoded in the 1^{st} frame, and in the 1^{st} frame, the interface still stays in the 0^{th} frame. To be specific, the scroll bar in the interface still stays at the position A, and the picture displayed in the interface is still a picture displayed when the scroll bar stays at the position A. That is, the 0^{th} picture to the 36^{th} picture are displayed. In the (n+1)^{th} frame, namely, the 2^{nd} frame, the UI thread executes an input event of the 2^{nd} frame, to obtain a corresponding scroll bar dragging position C, and obtain picture index positions 2000 to 2036 corresponding to the position. In the 2^{nd} frame, if a decoding process of the 1^{st} frame is not completed, the decode thread still decodes a 1000^{th} picture to a 1036^{th} picture, and decodes a picture corresponding to a picture index position requested by the input event of the 2^{nd} frame, for example, decodes a 2000^{th} picture to a 2036^{th} picture. In addition, the image of the 0^{th} frame is still displayed in the 2^{nd} frame. In other words, the picture corresponding to the picture index position requested by the input event of the 1^{st} frame is decoded in a period of time of two frames: the 1^{st} frame and the 2^{nd} frame. In an (n+2)^{th} frame, namely, the 3^{rd} frame, the UI thread executes an input event of the 3^{rd} frame, to obtain a corresponding scroll bar dragging position D, and obtain picture index positions 3000 to 3036 corresponding to the position. In the 3^{rd} frame, the decode thread still decodes the 2000^{th} picture to the 2036^{th} picture, and decodes a picture corresponding to the picture index position requested by the input event of the 3^{rd} frame, for example, decodes a 3000^{th} picture to a 3036^{th} picture. In addition, the image of the 1^{st} frame is displayed in the 3^{rd} frame. The image of the 1^{st} frame includes the 1000^{th} picture to the 1036^{th} picture obtained through decoding in the 1^{st} frame and the 2^{nd} frame. In an (n+3)^{th} frame, namely, the 4^{th} frame, the UI thread executes an input event of the 4^{th} frame, to obtain a corresponding scroll bar dragging position B, and obtain picture index positions 4000 to 4036 corresponding to the position. In the 4^{th} frame, the decode thread still decodes the 3000^{th} picture to the 3036^{th} picture, and decodes a picture corresponding to the picture index position requested by the input event of the 4^{th} frame, for example, decodes a 4000^{th} picture to a 4036^{th} picture. In addition, the image of the 2^{nd} frame is displayed in the 4^{th} frame. The image of the 2^{nd} frame includes the 2000^{th} picture to the 2036^{th} picture obtained through decoding in the 2^{nd} frame and the 3^{rd} frame. The rest may be deduced by analogy. In the second staggered-frame processing procedure, in the (n+1)^{th} frame and the (n+2)^{th} frame, a picture of the (n+1)^{th} frame is decoded, and a picture of the (n-1)^{th} frame is displayed. For each frame starting from the nth frame, a picture of one frame is decoded in a period of time of two frames, and then a picture decoded in two previous frames is displayed in a current frame. In other words, in the second staggered-frame processing procedure, a picture corresponding to a picture index position requested by an input event of any frame is decoded in two previous frames starting from the frame, and is displayed in a 3^{rd} frame starting from the frame. This method gives more picture decoding time, so that there is a higher probability that a picture is displayed subsequently. In addition, in a subsequent process, the picture is decoded and displayed separately in staggered different frames. That is, more picture decoding time is given, to improve a probability of displaying the picture.

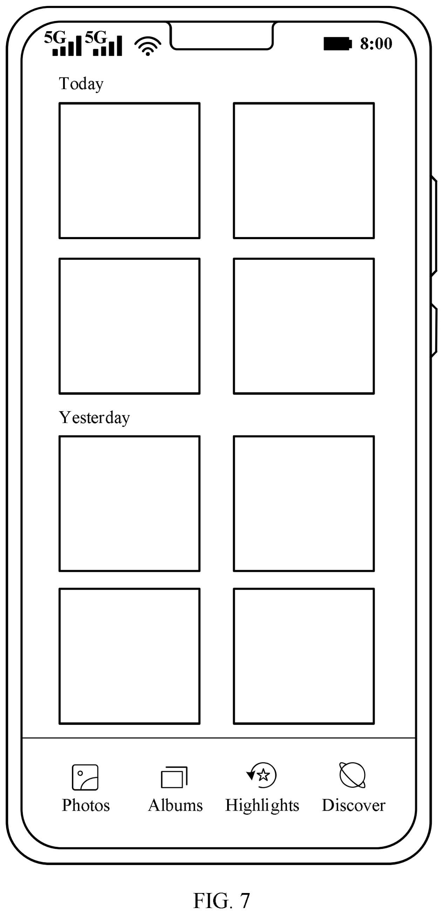

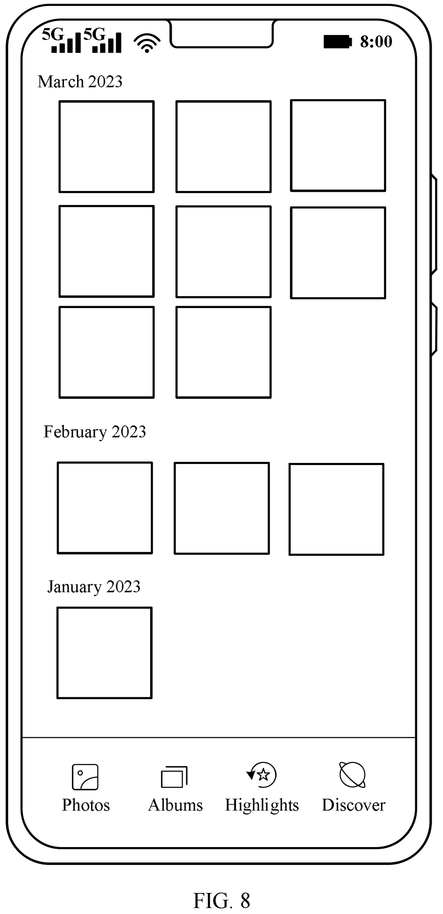

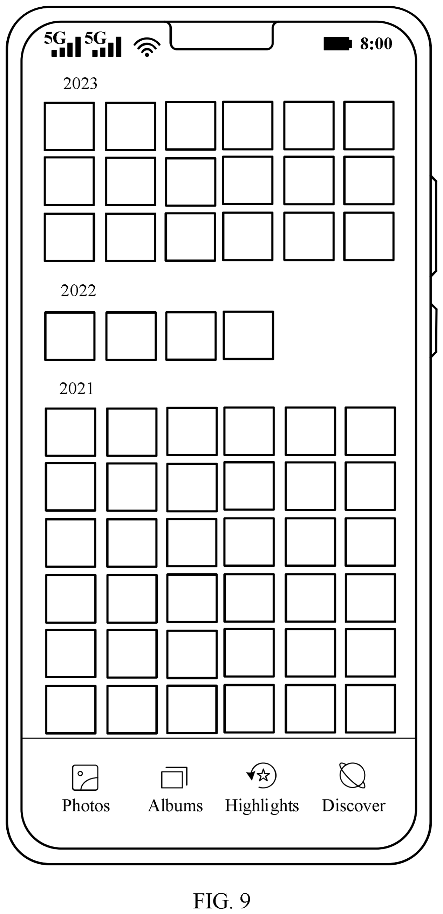

In a possible implementation, when the interface is a first view interface, the staggered-frame processing procedure is a first staggered-frame processing procedure; when the interface is a second view interface, the staggered-frame processing procedure is a second staggered-frame processing procedure, and a quantity of pictures displayed in the first view interface is less than or equal to a quantity of pictures displayed in the second view interface; a=1 in the first staggered-frame processing procedure; a=2 in the second staggered-frame processing procedure; and the second staggered-frame processing procedure further includes: obtaining, in an (n+1)^{th} frame, a picture index position requested by an input event of the (n+1)^{th} frame, decoding a picture corresponding to the picture index position requested by the input event of the (n+1)^{th} frame, and displaying the image of the (n-1)^{th} frame. For example, the first view interface is a day view interface, and the second view interface is a month view interface or a year view interface. As shown in FIG. 7, the day view interface is an interface that displays a picture in a unit of day. As shown in FIG. 8, a month view is an interface that displays a picture in a unit of month. As shown in FIG. 9, the year view interface is an interface that displays a picture in a unit of year. The month view interface or the year view interface displays more pictures on a same screen than the day view interface. Therefore, more pictures need to be decoded in a same frame. Therefore, when the interface is the second view interface that displays more pictures, the second staggered-frame processing procedure is applied, to decode a picture of the n^{th} frame in a period of time of two frames, thereby improving a probability that the picture is displayed. However, when the interface is the first view interface that displays fewer pictures, the second staggered-frame processing procedure is applied, to decode the picture of the n^{th} frame in a period of staggered-frame time of one frame, thereby improving a probability that the picture is displayed and reducing a response time of scrolling of the interface.

In the foregoing embodiment, the first view interface and the second view interface are distinguished by different time granularities. In another possible implementation, the first view interface and the second view interface may alternatively be view types obtained through classification based on another rule, provided that the first view interface is a view type used to display a large quantity of pictures, and the second view interface is a view type used to display a small quantity of pictures. For example, the gallery has a preset large-image mode, a medium-image mode, and a small-image mode, and different view interfaces are distinguished by different modes. In the large-image mode, a display size of a picture is large, and the interface displays a small quantity of pictures. In the medium-image mode, a display size of a picture is medium, and the interface displays a medium quantity of pictures. In the small-image mode, a display size of a picture is small, and the interface displays a large quantity of pictures. The first view interface may be a view interface in the large-image mode, and the second view interface may be a view interface in the medium-image mode or a view interface in the small-image mode.

The following describes, by using a specific example, a processing process of one frame in a staggered-frame processing procedure in this embodiment of this application.

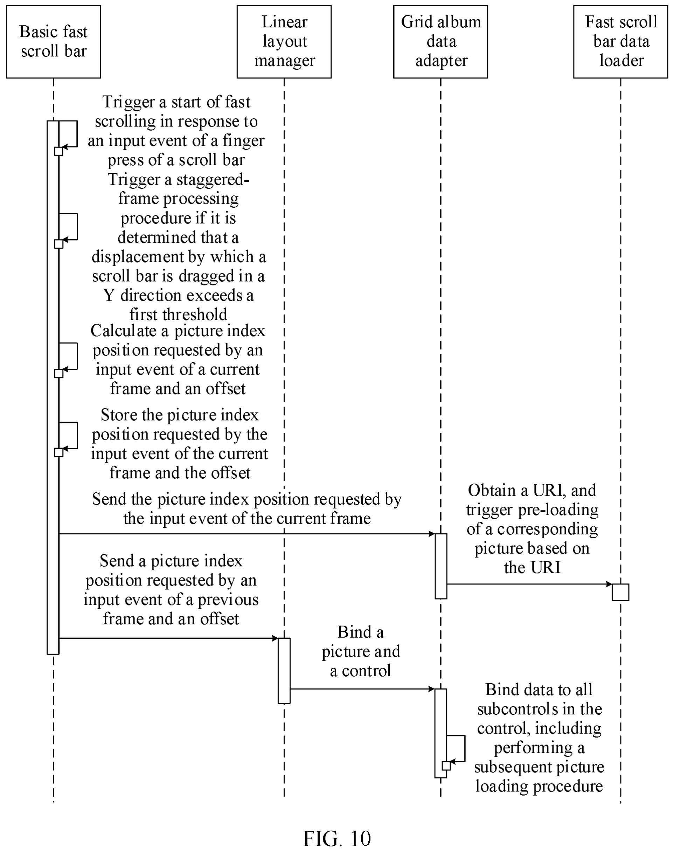

As shown in FIG. 10, a software architecture includes a basic fast scroll bar BaseFastScroller, a linear layout manager LinearLayoutManager, a grid album data adapter GridAlbumDataAdapter, and a fast scroll bar data loader FastScrollerDataLoader. The four modules may be modules at an application layer, and the four modules may perform a staggered-frame processing procedure by invoking a staggered-frame management module.

The basic fast scroll bar triggers a start of fast scrolling in response to an input event of a finger press of a scroll bar.

After the basic fast scroll bar starts fast scrolling, if it is determined that a displacement by which the scroll bar is dragged in a Y direction exceeds a first threshold, the staggered-frame processing procedure is triggered.

The staggered-frame processing procedure includes:

The basic fast scroll bar calculates, based on a displacement by which the scroll bar is dragged in a current frame and a total length of a view, a picture index position requested by an input event of the current frame and an offset, where the offset is an offset of a picture relative to a screen boundary;
the basic fast scroll bar stores the picture index position requested by the input event of the current frame and the offset for use in a next frame;
the basic fast scroll bar sends, to the grid album data adapter, the picture index position requested by the input event of the current frame;
the grid album data adapter obtains a uniform resource identifier (Uniform Resource Identifier, URI) based on the picture index position requested by the input event of the current frame, and triggers pre-loading of a corresponding picture based on the URI, where pre-loading is decoding;
the basic fast scroll bar sends, to the linear layout manager, a picture index position requested by an input event of a previous frame and an offset;
the linear layout manager binds a control item and a picture corresponding to the picture index position requested by the input event of the previous frame; and
the grid album data adapter binds data to all subcontrols in the control, including performing a subsequent picture loading procedure.

In a possible implementation, based on the staggered-frame processing procedure, a frame rate in a first state is less than a frame rate in a second state. In other words, duration of each frame in the first state is greater than duration of each frame in the second state. In the first state, an interface scrolls. Scrolling of the interface may be triggered in response to a drag operation acting on a scroll bar in the interface, or may be triggered in response to a slide operation acting on the interface. In the second state, the interface is still. If the interface has a scroll bar, the scroll bar is also still when the interface is still. The frame rate is a quantity of times a screen is refreshed per second. A frame is a refresh period of the screen, that is, a period of time required for refreshing the screen each time. For example, at a refresh rate of 60 Hz, duration of each frame is approximately 16 ms. In this embodiment of this application, for example, duration of each frame in the first state is set to 32 ms, and duration of each frame in the second state is set to 16 ms. When the scroll bar is dragged or the interface is slid, the refresh rate is switched to a refresh rate of 30 Hz. In this case, the duration of each frame is 32 ms. Therefore, a period of time for performing picture decoding in a period of time of one frame is longer, and more pictures may be simultaneously decoded in one frame. Therefore, even if a large quantity of pictures are refreshed in an interface scrolling process, there is also a high probability that decoding may be completed. Therefore, a problem that a picture is not displayed in a timely manner is alleviated. When the scroll bar is still, the refresh rate is switched to the refresh rate of 60 Hz. In this case, the duration of each frame is 16 ms. When the interface is still, the picture does not need to be refreshed, and only some content such as an interface change needs to be refreshed. Therefore, no more picture decoding time is required. A higher refresh rate may gradually reduce a screen ghosting problem, to make display smoother.

In a possible implementation, based on the staggered-frame processing procedure, a frame rate in a first state is less than a frame rate in a second state. In other words, duration of each frame in the first state is greater than duration of each frame in the second state. In the first state, an interface scrolls and a first speed exceeds a second threshold. Scrolling of the interface may be triggered in response to a drag operation acting on a scroll bar in the interface, or may be triggered in response to a slide operation acting on the interface. In the second state, the interface is still, or the interface scrolls and the first speed does not exceed the second threshold. For example, duration of each frame in the first state is set to 32 ms, and duration of each frame in the second state is set to 16 ms. When the scroll bar is dragged at a high speed or the interface is slid at a high speed, the refresh rate is switched to a refresh rate of 30 Hz. In this case, the duration of each frame is 32 ms. Therefore, a period of time for performing picture decoding in a period of time of one frame is longer, and more pictures may be simultaneously decoded in one frame. Therefore, even if a large quantity of pictures are refreshed in a fast interface scrolling process, there is also a high probability that decoding may be completed. Therefore, a problem that a picture is not displayed in a timely manner is alleviated. When the interface is still or is scrolled at a slow speed, the refresh rate is switched to the refresh rate of 60 Hz. In this case, the duration of each frame is 16 ms. When the interface is still or is scrolled at a slow speed, the picture does not need to be refreshed or a small quantity of pictures need to be refreshed. Therefore, no more picture decoding time is required. A higher refresh rate may gradually reduce a screen ghosting problem, to make display smoother. Therefore, reducing the frame rate in the staggered-frame processing procedure may further alleviate a problem that picture content is not displayed in a timely manner in a fast page scrolling process. A method for reducing the frame rate may be implemented by the foregoing frame rate reduction management module.

In a possible implementation, the first threshold is less than or equal to the second threshold. To be specific, in an interface scrolling process, the staggered-frame processing procedure and a frame rate reduction process may be triggered based on a same speed threshold, or the staggered-frame processing procedure may be triggered based on a lower speed threshold than a frame rate reduction process, that is, a problem that a picture is not displayed in a timely manner is preferentially alleviated based on the staggered-frame processing procedure.

In a possible implementation, based on the staggered-frame processing procedure, a dynamic-resolution decoding process may be implemented, and the dynamic-resolution decoding process may be implemented by the foregoing dynamic resolution module. A specific implementation of the dynamic-resolution decoding process is as follows: The picture displayed in the interface is a first-resolution picture if the first speed exceeds a third threshold; and the picture displayed in the interface is a second-resolution picture if the first speed does not exceed the third threshold, and a resolution of the second-resolution picture is greater than a resolution of the first-resolution picture. In other words, for example, the drag operation acting on the scroll bar triggers interface scrolling. When a drag speed of the drag operation on the scroll bar is high, a decoded picture is the first-resolution picture with a low resolution. When a drag speed of the drag operation on the scroll bar is slow or is still, a decoded picture is the second-resolution picture with a high resolution. For example, the resolution of the first-resolution picture is 64*64, the resolution of the second-resolution picture is 256*256, and decoding time of the first-resolution picture is only 1/4 of decoding time of the second-resolution picture. Therefore, decoding the first-resolution picture can reduce time consumed for decoding each picture. In a fast scroll bar dragging process, the problem that the picture is not displayed in a timely manner may be further alleviated. When fast dragging of the scroll bar ends and the scroll bar is slowly dragged or still, the second-resolution picture is decoded, to achieve a clear display effect.

In a possible implementation, the first threshold is less than the third threshold. To be specific, in an interface scrolling process, the staggered-frame processing procedure may be triggered based on a lower speed threshold than the dynamic-resolution decoding process, that is, a problem that a picture is not displayed in a timely manner is preferentially alleviated based on the staggered-frame processing procedure.

In addition, during implementation of the dynamic-resolution decoding process and the frame rate reduction process, the second threshold is less than the third threshold. In other words, the frame rate reduction process may be triggered based on a lower speed threshold than the dynamic-resolution decoding process.

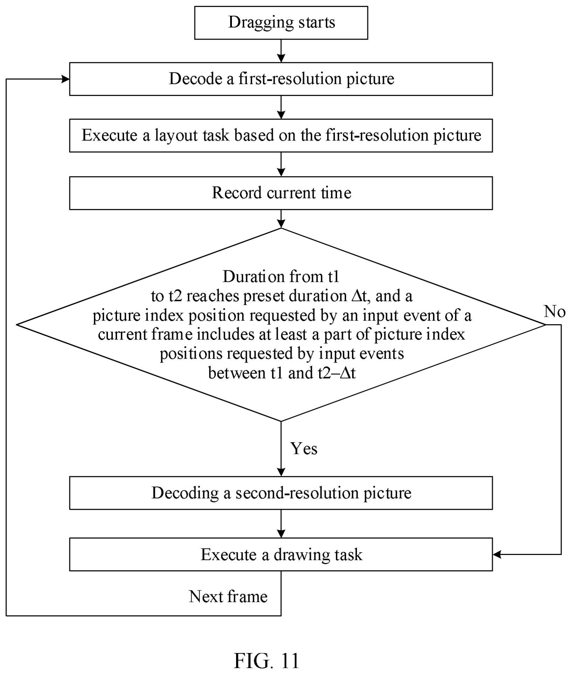

In a possible implementation, based on the staggered-frame processing procedure, as shown in FIG. 11, after the drag operation acting on the scroll bar starts, the first-resolution picture is decoded, a layout task is executed based on the first-resolution picture, current time t1 is recorded, and whether a preset condition is met is determined.

After the interface starts scrolling, if the preset condition is not met, a drawing task is directly executed to display an image, and a next frame is entered after the image is displayed. In other words, if the preset condition is not met, a decoded and displayed picture is still the first-resolution picture. If the staggered-frame processing procedure is executed in an interface image processing method of the current frame, a first-resolution picture decoded in the current frame is drawn and displayed in an (n+a)^{th} frame; or if the staggered-frame processing procedure is not executed in an interface image processing method of the current frame, but a picture decoded in the current frame is displayed, the first-resolution picture decoded in the current frame is drawn and displayed in the current frame.

After the interface starts scrolling, if the preset condition is met, decoding of the second-resolution picture is triggered, a drawing task is executed to display an image, and a next frame is entered. In other words, a second-resolution picture with a higher resolution is decoded in a frame that meets the preset condition, so that the second-resolution picture with a higher resolution is displayed subsequently. If the staggered-frame processing procedure is executed in the interface image processing method of the current frame, a second-resolution picture decoded in the current frame is drawn and displayed in the (n+a)^{th} frame; or if the staggered-frame processing procedure is not executed in the interface image processing method of the current frame, but a picture decoded in the current frame is displayed, the second-resolution picture decoded in the current frame is drawn and displayed in the current frame.

The preset condition is that duration from a moment t1 at which the interface starts scrolling to a current moment t2 reaches preset duration Δt, and a picture index position requested by an input event of the current frame includes at least a part of picture index positions requested by input events between t1 and t2-Δt. In other words, the electronic device continuously determines, for each frame starting from scrolling of the interface, whether the preset condition is met, and after determining that t1+△t is reached in a frame, because a current moment t2 of each frame reaches and exceeds t1 by the preset duration Δt, continuously determines, for each frame after t1+△t, whether the picture index position requested by the input event of the current frame includes the at least a part of picture index positions requested by the input events between t1 and t2-Δt, to determine a resolution of a picture whose decoding is triggered. A relationship between the dynamic-resolution decoding process and the staggered-frame processing procedure is not limited in this embodiment of this application. For example, the dynamic-resolution decoding process may be implemented in the staggered-frame processing procedure. To be specific, for each frame of the staggered-frame processing procedure, if the preset condition is not met, a first-resolution picture at the picture index position requested by the input event of the current frame is decoded, and a previously decoded first-resolution picture is displayed in a corresponding frame based on the staggered-frame processing procedure; or for each frame of the staggered-frame processing procedure, if the preset condition is not met, a second-resolution picture at the picture index position requested by the input event of the current frame is decoded, and the previously decoded second-resolution picture is displayed in a corresponding frame based on the staggered-frame processing procedure. For another example, the staggered-frame processing procedure and the dynamic-resolution decoding procedure may partially overlap. For example, when the preset condition is not met, the staggered-frame processing procedure is used, a first-resolution picture at the picture index position requested by the input event of the current frame is decoded, and a previously decoded first-resolution picture is displayed in a corresponding frame based on the staggered-frame processing procedure; and when the preset condition is met, the non-staggered-frame processing procedure is used, and the second-resolution picture is decoded and displayed in each frame.

Specifically, for example, the preset duration Δt is set to 100 ms, and dragging of the scroll bar is used as an example. After the drag operation acting on the scroll bar starts, in a 1^{st} frame, because 100 ms is not reached, the preset condition is not met, and a picture decoded in the frame is, for example, first-resolution pictures at picture index positions 1000 to 1036; in a 2^{nd} frame, because 100 ms is not reached, the preset condition is not met, and a picture decoded in the frame is, for example, first-resolution pictures at picture index positions 2000 to 2036; by analogy, in a 4^{th} frame, more than 100 ms is passed from the 1^{st} frame, that is, duration from the moment t1 (the 1^{st} frame) at which the interface starts scrolling to the current moment t2 (the 4^{th} frame) is greater than the preset duration Δt of 100 ms, and a moment between t1 and t2-100 ms is the moment t1, namely, the 1^{st} frame. However, a picture index position requested by an input event of the 4^{th} frame is 4000 to 4036, that is, the picture index position requested by the input event of the current frame does not include a picture index position requested by an input event between t1 and t2-Δt. Therefore, the preset condition is still not met. A picture decoded in the current frame is first-resolution pictures at picture index positions 4000 to 4036. By analogy, the preset condition is not met in the fast scroll bar dragging process, that is, the first-resolution picture is decoded, and the decoded first-resolution picture is displayed in a subsequent frame. In other words, in the fast scroll bar dragging process, the first-resolution picture with a low resolution is decoded, to improve a decoding speed of the picture, that is, improve a probability that the picture is decoded before being displayed. When the user no longer quickly drags the scroll bar, for example, the user lifts a finger in a process of dragging the scroll bar, for example, in a 13^{th} frame, and a picture index position requested by an input event of the 13^{th} frame is 10000 to 10036, first-resolution pictures corresponding to index positions 10000 to 10036 are decoded at the beginning. Because the picture index positions 10000 to 10036 requested by the input event of the 13^{th} frame include a picture index position requested by an input event at a moment that is the 13^{th} frame minus 100 ms, decoding of second-resolution pictures corresponding to the picture index positions 10000 to 10036 requested by the input event of the 13^{th} frame is triggered. The decoded second-resolution picture is displayed in a subsequent process, and the second-resolution picture is decoded from the 13^{th} frame. Therefore, the decoded second-resolution picture is displayed subsequently, to implement clear picture display.

If the preset condition is not met, it indicates that the first speed exceeds the third threshold, that is, an interface scrolling speed is fast. Therefore, the first-resolution picture is decoded to improve a decoding speed of the picture, to reduce a problem that the picture is not displayed in a timely manner. If the preset condition is met, it indicates that the first speed does not exceed the third threshold, that is, the interface scrolling speed is slow. Therefore, the second-resolution picture is decoded to improve picture display definition. In addition, because the interface scrolling speed is slow, the second-resolution picture is displayed in a timely manner even if being decoded.

In a possible implementation, as shown in FIG. 4 and FIG. 5A to FIG. 5D, obtaining the picture index position requested by the input event of the n^{th} frame includes: executing an input event task input of the n^{th} frame, to obtain the picture index position requested by the input event of the n^{th} frame; displaying the image of the (n-1)^{th} frame includes: executing a layout task layout of the (n-1)^{th} frame and a drawing task draw of the (n-1)^{th} frame; obtaining the picture index position requested by the input event of the (n+a)^{th} frame includes: executing an input event task of the (n+a)^{th} frame, and obtaining the picture index position requested by the input event of the (n+a)^{th} frame; and displaying the image of the n^{th} frame includes: executing a layout task of the n^{th} frame and a drawing task of the n^{th} frame. Arabic numerals in FIG. 4 and FIG. 5A to FIG. 5D indicate corresponding numbers of frames. For example, an input event 1 indicates an input event task of a 1^{st} frame, a layout 0 indicates a layout task of a 0^{th} frame, a drawing 0 indicates a drawing task of the 0^{th} frame, and decoding 1 indicates a decoding task of the 1^{st} frame. The input event task is a task executed in response to the input event.

It should be noted that the first threshold, the second threshold, and the third threshold in this embodiment of this application may be the same or may be different.

An embodiment of this application further provides an interface image processing method, which may not depend on the foregoing staggered-frame processing procedure. The interface image processing method includes: displaying a plurality of pictures in an interface. A frame rate in a first state is less than a frame rate in a second state. In other words, duration of each frame in the first state is greater than duration of each frame in the second state. In the first state, an interface scrolls. Scrolling of the interface may be triggered in response to a drag operation acting on a scroll bar in the interface, or may be triggered in response to a slide operation acting on the interface. In the second state, the interface is still. If the interface has a scroll bar, the scroll bar is also still when the interface is still. In this embodiment of this application, a change of the frame rate may not depend on the staggered-frame processing procedure. For example, at a refresh rate of 60 Hz, duration of each frame is approximately 16 ms. In this embodiment of this application, for example, duration of each frame in the first state is set to 32 ms, and duration of each frame in the second state is set to 16 ms. When the scroll bar is dragged or the interface is slid, the refresh rate is switched to a refresh rate of 30 Hz. In this case, the duration of each frame is 32 ms, and picture decoding of a current frame and picture displaying of the current frame are performed in each frame. Therefore, a period of time for performing picture decoding in a period of time of one frame is longer, and more pictures may be simultaneously decoded in one frame. Therefore, even if a large quantity of pictures are refreshed in an interface scrolling process, there is also a high probability that decoding may be completed. Therefore, a problem that a picture is not displayed in a timely manner is alleviated. When the interface is still, the refresh rate is switched to the refresh rate of 60 Hz. In this case, the duration of each frame is 16 ms, and picture decoding of the current frame and picture displaying of the current frame are performed in each frame. When the interface is still, the picture does not need to be refreshed, and only some content such as an interface change needs to be refreshed. Therefore, no more picture decoding time is required. A higher refresh rate may gradually reduce a screen ghosting problem, to make display smoother.

In a possible implementation, without depending on the foregoing staggered-frame processing procedure, the interface image processing method includes: displaying a plurality of pictures in an interface. A frame rate in a first state is less than a frame rate in a second state. In other words, duration of each frame in the first state is greater than duration of each frame in the second state. In the first state, an interface scrolls and a first speed exceeds a second threshold. Scrolling of the interface may be triggered in response to a drag operation acting on a scroll bar in the interface, or may be triggered in response to a slide operation acting on the interface. In the second state, the interface is still, or the interface scrolls and the first speed does not exceed the second threshold. For example, duration of each frame in the first state is set to 32 ms, and duration of each frame in the second state is set to 16 ms. When the scroll bar is dragged at a high speed or the interface is slid at a high speed, the refresh rate is switched to a refresh rate of 30 Hz. In this case, the duration of each frame is 32 ms, and picture decoding of a current frame and picture displaying of the current frame are performed in each frame. Therefore, a period of time for performing picture decoding in a period of time of one frame is longer, and more pictures may be simultaneously decoded in one frame. Therefore, even if a large quantity of pictures are refreshed in a fast interface scrolling process, there is also a high probability that decoding may be completed. Therefore, a problem that a picture is not displayed in a timely manner is alleviated. When the interface is still or is scrolled at a slow speed, the refresh rate is switched to the refresh rate of 60 Hz. In this case, the duration of each frame is 16 ms, and picture decoding of a current frame and picture displaying of the current frame are performed in each frame. When the interface is still or is scrolled at a slow speed, the picture does not need to be refreshed or a small quantity of pictures need to be refreshed. Therefore, no more picture decoding time is required. A higher refresh rate may gradually reduce a screen ghosting problem, to make display smoother. Therefore, reducing the frame rate in the staggered-frame processing procedure may further alleviate a problem that picture content is not displayed in a timely manner in a fast page scrolling process.

An embodiment of this application further provides an interface image processing method, which may not depend on the foregoing staggered-frame processing procedure. The interface image processing method includes: displaying a plurality of pictures in an interface, where the picture is a first-resolution picture if a first speed exceeds a third threshold, and the first speed is a scrolling speed of the interface or a drag speed of a drag operation acting on a scroll bar in the interface; and the picture is a second-resolution picture if the first speed does not exceed the third threshold, and a resolution of the second-resolution picture is greater than a resolution of the first-resolution picture. In other words, for example, the drag operation acting on the scroll bar triggers interface scrolling. When a drag speed of the drag operation on the scroll bar is high, a decoded and displayed picture is the first-resolution picture with a low resolution. When a drag speed of the drag operation on the scroll bar is slow or is still, a decoded and displayed picture is the second-resolution picture with a high resolution. In a fast scroll bar dragging process, the problem that the picture is not displayed in a timely manner may be further alleviated. When fast dragging of the scroll bar ends and the scroll bar is slowly dragged or still, the second-resolution picture is decoded and displayed, to achieve a clear display effect.

In a possible implementation, as shown in FIG. 11, without depending on the foregoing staggered-frame processing procedure, the first-resolution picture is decoded and displayed if a preset condition is not met after the interface starts scrolling; and the second-resolution picture is decoded and displayed if the preset condition is met after the interface starts scrolling, where the preset condition is that duration from a moment at which the interface starts scrolling to a current moment reaches preset duration, and a picture index position requested by an input event of a current frame includes a picture index position requested by an input event of a frame that is before the preset duration.

Specifically, for example, the preset duration Δt is set to 100 ms, and dragging of the scroll bar is used as an example. After the drag operation acting on the scroll bar starts, in a 1^{st} frame, because 100 ms is not reached, the preset condition is not met, and a picture decoded and displayed in the frame is, for example, first-resolution pictures at picture index positions 1000 to 1036; in a 2^{nd} frame, because 100 ms is not reached, the preset condition is not met, and a picture decoded and displayed in the frame is, for example, first-resolution pictures at picture index positions 2000 to 2036; by analogy, in a 4^{th} frame, more than 100 ms is passed from the 1^{st} frame, that is, duration from the moment t1 (the 1^{st} frame) at which the interface starts scrolling to the current moment t2 (the 4^{th} frame) is greater than the preset duration Δt of 100 ms, and a moment between t1 and t2-100 ms is the moment t1, namely, the 1^{st} frame. However, a picture index position requested by an input event of the 4^{th} frame is 4000 to 4036, that is, the picture index position requested by the input event of the current frame does not include a picture index position requested by an input event between t1 and t2-Δt. Therefore, the preset condition is still not met. A picture decoded and displayed in the current frame is first-resolution pictures at picture index positions 4000 to 4036. By analogy, the preset condition is not met in the fast interface dragging process, that is, the first-resolution picture is decoded, and the decoded first-resolution picture is displayed in the current frame. In other words, in the fast scroll bar dragging process, the first-resolution picture with a low resolution is decoded and displayed, to improve a decoding speed of the picture, that is, improve a probability that the picture is decoded before being displayed. When the user no longer quickly drags the scroll bar, for example, the user lifts a finger in a process of dragging the scroll bar, for example, in a 13^{th} frame, and a picture index position requested by an input event of the 13^{th} frame is 10000 to 10036, first-resolution pictures corresponding to index positions 10000 to 10036 are decoded at the beginning. Because the picture index positions 10000 to 10036 requested by the input event of the 13^{th} frame include a picture index position requested by an input event at a moment that is the 13^{th} frame minus 100 ms, decoding of second-resolution pictures corresponding to the picture index positions 10000 to 10036 requested by the input event of the 13^{th} frame is triggered. The decoded second-resolution picture is displayed in the current frame, and the second-resolution picture is decoded and displayed from the 13^{th} frame, to implement clear picture display.

An embodiment of this application further provides an electronic device, including a processor and a memory. The memory is configured to store at least one instruction, and when the instruction is loaded and executed by the processor, the electronic device is enabled to perform the interface image processing method in any one of the foregoing embodiments. A specific process and principle of the interface image processing method may be the same as those in the foregoing embodiments, and details are not described herein again. A specific structure and principle of the electronic device may be the same as those in the foregoing embodiment, and details are not described herein again.

The electronic device in this application may be any product such as a smart television, a mobile phone, a tablet computer, a personal computer (personal computer, PC), a personal digital assistant (personal digital assistant, PDA), a smartwatch, a wearable electronic device, an augmented reality (augmented reality, AR) device, a virtual reality (virtual reality, VR) device, a vehicle-mounted device, an unscrewed aerial vehicle device, an intelligent vehicle, a smart speaker, a robot, or smart glasses.

An embodiment of this application further provides a computer-readable storage medium, including a program or instructions. When the program or the instructions are run on a computer, the method in any one of the foregoing method embodiments is performed.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in a computer-readable storage medium, or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk), or the like.

In embodiments of this application, "at least one" means one or more, and "plurality of" means two or more. "And/or" describes an association relationship for describing associated objects and represents that three relationships may exist. For example, A and/or B may represent the following three cases: Only A exists, both A and B exist, and only B exists. A and B may be singular or plural. The character "/" generally indicates an "or" relationship between the associated objects. "At least one of the following" and similar expressions refer to any combination of these terms, including any combination of single or plural terms. For example, at least one of a, b, and c may represent: a, b, c, a-b, a-c, b-c, or a-b-c, where a, b, and c may be one or more.

The foregoing descriptions are merely preferred embodiments of this application, and are not intended to limit this application. For a person skilled in the art, this application may have various modifications and variations. Any modification, equivalent replacement, or improvement made without departing from the spirit and principle of this application shall fall within the protection scope of this application.

## Claims

1. An interface image processing method, wherein the interface is configured to display a plurality of pictures, the method comprises a staggered-frame processing procedure, and the staggered-frame processing procedure comprises:
obtaining, in an n^{th} frame, a picture index position requested by an input event of the n^{th} frame, decoding a picture corresponding to the picture index position requested by the input event of the n^{th} frame, and displaying an image of an (n-1)^{th} frame, wherein the image of the (n-1)^{th} frame comprises a picture corresponding to a picture index position requested by an input event of the (n-1)^{th} frame; and
obtaining, in an (n+a)^{th} frame, a picture index position requested by an input event of the (n+a)^{th} frame, decoding a picture corresponding to the picture index position requested by the input event of the (n+a)^{th} frame, and displaying an image of the n^{th} frame, wherein the image of the n^{th} frame comprises the picture corresponding to the picture index position requested by the input event of the n^{th} frame, and a is an integer greater than or equal to 1.

2. The method according to claim 1, wherein
executing the staggered-frame processing procedure if a first speed exceeds a first threshold, wherein the first speed is a scrolling speed of the interface or a drag speed of a drag operation acting on a scroll bar in the interface.

3. The method according to claim 1 or 2, wherein
a=1.

4. The method according to claim 1 or 2, wherein
a=2; and
the staggered-frame processing procedure further comprises:
obtaining, in an (n+1)^{th} frame, a picture index position requested by an input event of the (n+1)^{th} frame, decoding a picture corresponding to the picture index position requested by the input event of the (n+1)^{th} frame, and displaying the image of the (n-1)^{th} frame.

5. The method according to claim 1 or 2, wherein
when the interface is a first view interface, the staggered-frame processing procedure is a first staggered-frame processing procedure;
when the interface is a second view interface, the staggered-frame processing procedure is a second staggered-frame processing procedure, and a quantity of pictures displayed in the first view interface is less than a quantity of pictures displayed in the second view interface;
a=1 in the first staggered-frame processing procedure;
a=2 in the second staggered-frame processing procedure; and
the second staggered-frame processing procedure further comprises:
obtaining, in an (n+1)^{th} frame, a picture index position requested by an input event of the (n+1)^{th} frame, decoding a picture corresponding to the picture index position requested by the input event of the (n+1)^{th} frame, and displaying the image of the (n-1)^{th} frame.

6. The method according to claim 5, wherein
the first view interface is a day view interface, the second view interface is a month view interface or a year view interface, the day view interface is an interface that displays a picture in a unit of day, the month view interface is an interface that displays a picture in a unit of month, and the year view interface is an interface that displays a picture in a unit of year.

7. The method according to claim 2, wherein
a frame rate in a first state is less than a frame rate in a second state; and
the interface scrolls in the first state, and the interface is still in the second state.

8. The method according to claim 2, wherein
a frame rate in a first state is less than a frame rate in a second state;
in the first state, the interface scrolls and the first speed exceeds a second threshold; and
in the second state, the interface is still, or the interface scrolls and the first speed does not exceed the second threshold.

9. The method according to claim 8, wherein
the first threshold is less than or equal to the second threshold.

10. The method according to claim 2, wherein
the picture displayed in the interface is a first-resolution picture if the first speed exceeds a third threshold; and
the picture displayed in the interface is a second-resolution picture if the first speed does not exceed the third threshold, and a resolution of the second-resolution picture is greater than a resolution of the first-resolution picture.

11. The method according to claim 10, wherein
the first threshold is less than the third threshold.

12. The method according to claim 10 or 11, wherein
decoding and displaying the first-resolution picture if a preset condition is not met after the interface starts scrolling; and
decoding and displaying the second-resolution picture if the preset condition is met after the interface starts scrolling, wherein the preset condition is that duration from a moment t1 at which the interface starts scrolling to a current moment t2 reaches preset duration Δt, and a picture index position requested by an input event of a current frame comprises at least a part of picture index positions requested by input events between t1 and t2-Δt.

13. The method according to any one of claims 1 to 12, wherein
obtaining the picture index position requested by the input event of the n^{th} frame comprises: executing an input event task of the n^{th} frame, to obtain the picture index position requested by the input event of the n^{th} frame;
displaying the image of the (n-1)^{th} frame comprises: executing a layout task of the (n-1)^{th} frame and a drawing task of the (n-1)^{th} frame;
obtaining the picture index position requested by the input event of the (n+a)^{th} frame comprises: executing an input event task of the (n+a)^{th} frame, and obtaining the picture index position requested by the input event of the (n+a)^{th} frame; and
displaying the image of the n^{th} frame comprises: executing a layout task of the n^{th} frame and a drawing task of the n^{th} frame.

14. An interface image processing method, comprising:
displaying a plurality of pictures in the interface, wherein
a frame rate in a first state is less than a frame rate in a second state; and
the interface scrolls in the first state, and the interface is still in the second state.

15. An interface image processing method, comprising:
displaying a plurality of pictures in an interface, wherein
a frame rate in a first state is less than a frame rate in a second state;
in the first state, the interface scrolls and a first speed exceeds a second threshold, and the first speed is a scrolling speed of the interface or a drag speed of a drag operation acting on a scroll bar in the interface; and
in the second state, the interface is still and the first speed does not exceed the second threshold.

16. An interface image processing method, comprising:
displaying a plurality of pictures in an interface, wherein
the picture is a first-resolution picture if a first speed exceeds a third threshold, and the first speed is a scrolling speed of the interface or a drag speed of a drag operation acting on a scroll bar in the interface; and
the picture is a second-resolution picture if the first speed does not exceed the third threshold, and a resolution of the second-resolution picture is greater than a resolution of the first-resolution picture.

17. The method according to claim 16, wherein
decoding and displaying the first-resolution picture if a preset condition is not met after the interface starts scrolling; and
decoding and displaying the second-resolution picture if the preset condition is met after the interface starts scrolling, wherein the preset condition is that duration from a moment at which the interface starts scrolling to a current moment reaches preset duration, and a picture index position requested by an input event of a current frame comprises a picture index position requested by an input event of a frame that is before the preset duration.

18. An electronic device, comprising:
a processor and a memory, wherein the memory is configured to store at least one instruction, and when the instruction is loaded and executed by the processor, the electronic device is enabled to perform the interface image processing method according to any one of claims 1 to 17.

19. A computer-readable storage medium, comprising a program or instructions, wherein when the program is run or the instructions are run on a computer, the method according to any one of claims 1 to 17 is performed.
